# EUROPEAN PATENT SPECIFICATION

(11) **EP 3 977 355 B1**
(45) Date of publication and mention of the grant of the patent: **13.11.2024**
(21) Application number: 20733157.0
(22) Date of filing: 28.05.2020
(51) Int. Cl.: G06K 19/077, H01Q 1/22

(54) **METHODS OF MANUFACTURING A RADIO FREQUENCY IDENTIFICATION TAG**
VERFAHREN ZUR HERSTELLUNG EINES RADIOFREQUENZ-IDENTIFIKATIONSETIKETTS
PROCÉDÉS DE FABRICATION D'UNE ÉTIQUETTE D'IDENTIFICATION PAR RADIOFRÉQUENCE

(30) Priority: 29.05.2019 US 201962854126 P; 28.12.2019 US 201962954482 P
(43) Date of publication of application: 06.04.2022
(60) Divisional application: 22196672.4
(73) Proprietor: Avery Dennison Retail Information Services LLC, Mentor, OH 44060 (US)
(72) Inventor: FORSTER, Ian, Mentor, Ohio 44060 (US)
(74) Representative: HGF
(86) International application number: PCT/US2020/034864
(87) International publication number: WO 2020/243260

(56) References cited:
- WO-A1-2007/109891
- US-A1- 2006 044 769
- US-A1- 2010 051 703
- US-B1- 7 551 141

## Description

### FIELD

The present invention relates generally to the production of a radio frequency identification (RFID) tags that can be generated on three dimensional (3D) objects or packages. More specifically, for 3D objects, the RFID tag can be formed on the surface of the 3D object or its primary or secondary packaging by producing a conductive material on the object, compensating for its shape and position, and coupling the conductive material to a reactive RFID strap to form the RFID tag that can then induce a far field RFID antenna response.

### BACKGROUND

Generally stated, radio-frequency identification is the use of electromagnetic energy to stimulate a responsive device (known as an RFID "tag" or transponder) to identify itself and, in some cases, provide additional information and/or data stored in the tag. RFID tags typically comprise a semiconductor device commonly referred to as the "chip", upon which are formed a memory and an operating circuitry, which is connected to an antenna. Typically, RFID tags act as transponders, providing information stored in the chip memory in response to a radio frequency interrogation signal received from a reader, also referred to as an interrogator. In the case of passive RFID devices, the energy of the interrogation signal also provides the necessary energy to operate the RFID tag device.

As referenced above, RFID tags are generally formed by connecting an RFID chip to some form of antenna. Antenna types are very diverse, as are the methods of constructing the same. One particularly advantageous method of making RFID tags is to use a strap, a small device with an RFID chip connected to two or more conductors that can be coupled to an antenna. The coupling of the conductors to the antenna can be achieved using a conductive connection, an electric field connection, magnetic connection or a combination of coupling methods.

RFID tags may be incorporated into or attached to articles that a user wishes to later identify and/or track. In some cases, the tag may be attached to the outside of the article with a clip, adhesive, tape, or other means and, in other cases, the RFID tag may be inserted within the article, such as being included in the packaging, located within the container of the article, or sewn into a garment. Further, RFID tags are manufactured with a unique identification number which is typically a simple serial number of a few bytes with a check digit attached. This identification number is typically incorporated into the RFID tag during its manufacture. The user cannot alter this serial/identification number, and manufacturers guarantee that each RFID tag serial number is used only once and is, therefore, unique. Such read-only RFID tags typically are permanently attached to an article to be identified and/or tracked and, once attached, the serial number of the tag is associated with its host article in a computer database.

Additionally, a number of retail products, other items, and their associated packaging have non-planar surfaces that are not ideal for receiving traditional RFID tags thereon. For example, on a bottle, it is oftentimes necessary to form the RFID tag antenna on the flat portion of the base or top of the bottle to obtain a more secure attachment between the bottle and the RFID tag, as opposed to a curved portion of said bottle. Therefore, there also exists in the art a long felt need for a method of forming an antenna on any portion of the bottle, or any other non-planar surface, that is adapted to the shape that, when used in conjunction with a reactive RFID strap that is flexible enough to conform to the surface, a high performance RFID tag is created. More specifically, the present invention discloses a method of depositing a conductor onto a non-planar surface of an object, wherein the antenna shape may be adapted to function optimally and thereby providing the manufacturer with greater flexibility in RFID tag formation and/or placement.

US 7 551141 B1 discloses an electronic assembly with integrated circuit capacitively coupled to antenna. The electronic assembly includes a strap assembly and an antenna assembly. The antenna assembly includes a first substrate and antenna elements. The strap assembly includes a second substrate and an integrated circuit embedded within the second substrate and substantially flush with a surface of the second substrate. Interconnections are formed to the integrated circuit. The interconnections are formed on the surface of the second substrate. The antenna assembly and the strap assembly are affixed to one another with the surface of the second substrate facing the antenna elements. The antenna elements capacitively couples to the integrated circuit through the interconnections with no direct contact. A non-conductive layer is disposed between the antenna elements and the interconnections providing the capacitive coupling.

US 2010/051703 A1 discloses a radio frequency identification tag including a substrate, and an antenna pattern disposed on an outer peripheral side surface of the substrate. An electronic device is electrically connected to the antenna pattern, and is mounted on the outer peripheral side surface of the substrate.

US 2006/044769 A1 discloses an RFID device, such as an RFID tag or label, including a magnetic coupler between an interposer or strap, and an antenna. The interposer or strap includes a transponder chip and an interposer magnetic coupling element that is operatively coupled to the transponder. An antenna portion magnetic coupling element is operatively coupled to the antenna. The magnetic coupling elements together constitute a magnetic coupler that is used to magnetically couple the transponder chip of the interposer to the RFID antenna. A high permeability material may be used to enhance the magnetic coupling between the magnetic coupling elements. The magnetic coupling elements single-turn conductive loops or multiple-turn coils. The magnetic coupler may function as a transformer, with the voltage across the antenna transformed to a different voltage across the transponder chip, and vice versa.

WO 2007/109891 A1 discloses an RFID item level construct involving an antenna printed or otherwise placed upon or integrated into a label or wrapper; an RFID strap placed directly upon the surface of an item level container, such as a bottle, case, box, or container of any irregular, regular, round, square or other shape made of any non-metallic material, or if made of metallic material placed using a spacer (such as foam or cardboard); and an indirect matching of the two components by placing the pre-printed label upon the container in exactly the usual fashion without regard to any special attachment process, material, connecting or other handling requirement in order to make a fully functioning RFID-enabled item.

### SUMMARY

The following presents a simplified summary in order to provide a basic understanding of some aspects of the disclosed innovation. This summary is not an extensive overview, and it is not intended to identify key/critical elements or to delineate the scope thereof. Its sole purpose is to present some concepts in a simplified form as a prelude to the more detailed description that is presented later.

According to a first aspect, there is provided a method of manufacturing a radio frequency identification, RFID, tag on a non-planar surface of an object as defined by claim 1. The method comprises forming an antenna on the non-planar surface of the object, wherein the antenna is sprayed or printed on the non-planar surface of the object; positioning a reactive RFID strap on the non-planar surface of the object, so that, when in use, the RFID strap couples to the antenna to induce an antenna response. Coupling can be between electric fields, magnetic fields, or both.

In other embodiments, the reactive RFID strap may be positioned before the antenna is formed on the surface of the non-planar object.

According to a second aspect, there is provided a method of manufacturing a RFID tag adapted for a non-planar surface of an object as defined by claim 7. The method comprises scanning a non-planar surface of the object; selecting a design for an antenna suitable for the non-planar surface at a chosen location; selecting a design of a reactive RFID strap; choosing a position for attaching the reactive RFID strap relative to the non-planar surface, and forming the RFID tag on the non-planar surface to induce a far field antenna response; wherein forming the RFID tag on the non-planar surface comprises forming the RFID antenna on the non-planar surface of the object either before or after the reactive RFID strap is positioned on the surface, wherein the antenna is sprayed or printed on the non-planar surface of the object. Additionally, a radio frequency (RF) performance may be measured to ensure proper performance of the RFID tag and for purposes of optimizing the design. The reactive RFID strap can be coupled to the antenna, wherein coupling can be between electric fields, magnetic fields, or both.

To the accomplishment of the foregoing and related ends, certain illustrative aspects of the disclosed innovation are described herein in connection with the following description and the annexed drawings. These aspects are indicative, however, of but a few of the various ways in which the principles disclosed herein can be employed and is intended to include all such aspects and their equivalents. Other advantages and novel features will become apparent from the following detailed description when considered in conjunction with the drawings.

### BRIEF DESCRIPTION OF THE DRAWINGS

FIG. 1 illustrates a top perspective view of a reactive RFID strap component, not in accordance with the present invention, in proximity to and coupled with a metallic object in accordance with the disclosed architecture.
FIG. 2A illustrates a front perspective view of a clip component not in accordance with the present invention.
FIG. 2B illustrates a front perspective view of a clip component, not in accordance with the present invention.
FIG. 3A illustrates a front perspective view of a tab component with the conductor component forming a conductive loop thereon in proximity to a metallic object, not in accordance with the present invention.
FIG. 3B illustrates a front perspective view of a conductor component forming a U-shaped conductor on the tab component in proximity to a metallic object, not in accordance with the disclosed architecture.
FIG. 3C illustrates a front perspective view of a conductor component forming a conductive loop mounted on the frame and encircling the tab component in proximity to a metallic object, not in accordance with the present invention.
FIG. 4 illustrates a flowchart of the basic process for manufacturing the reactive RFID strap component of the present invention not in accordance with the present invention.
FIG. 5A illustrates a front perspective view of the reactive RFID strap component before being modified with surface deflections not in accordance with the present invention.
FIG. 5B illustrates a side perspective view of the reactive RFID strap component of FIG. 5A before being modified with surface deflections not in accordance with the present invention.
FIG. 5C illustrates a front perspective view of the reactive RFID strap component after being modified with surface deflections not in accordance with the present invention.
FIG. 5D illustrates a side perspective view of the reactive RFID strap component of FIG. 5C after being modified with surface deflections not in accordance with the present invention.
FIG. 6A illustrates a front perspective view of an embodiment of the reactive RFID strap component modified with additional adhesive fixing points not in accordance with the present invention.
FIG. 6B illustrates a front perspective view of an alternative embodiment of the reactive RFID strap component modified with additional adhesive fixing points not in accordance with the present invention.
FIG. 7A illustrates a front perspective view of the reactive RFID strap component modified with tabs and designed to engage an opening already formed in the metallic object not in accordance with the present invention.
FIG. 7B illustrates a side perspective view of the reactive RFID strap component modified with tabs and designed to engage an opening already formed in the metallic object not in accordance with the present invention.
FIG. 7C illustrates a front perspective view of the reactive RFID strap component modified with tabs and engaging an opening formed in the metallic object not in accordance with the present invention.
FIG. 8 illustrates a top perspective view of the reactive RFID strap component secured to a metallic bag not in accordance with the present invention.
FIG. 9 illustrates a graph of the far field response not in accordance with the present invention.
FIG. 10 illustrates a top perspective view of the reactive RFID strap component secured to a metallic box not in accordance with the present invention.
FIG. 11 illustrates a graph of the far field response not in accordance with the present invention.
FIG. 12 illustrates an exploded view of a reactive RFID strap and an antenna coupled together to form a RFID tag, not in accordance with the present invention.
FIG. 13 illustrates an exploded view of one possible embodiment of the RFID tag adapted for use on a non-planar object, not in accordance with the present invention.
FIG. 14 illustrates a flowchart of the basic process for assembling the RFID tag on a non-planar surface of an object in accordance with the disclosed architecture.
FIG. 15 illustrates a flowchart of a basic process for scanning a non-planar surface of an object and assembling an RFID tag on the non-planar surface of the object in accordance with the disclosed architecture.
FIG. 16 illustrates a flowchart of the basic process for manufacturing the RFID tag on the non-planar surface of the object in accordance with the disclosed architecture.
FIG. 17 illustrates a flowchart of manufacturing a RFID tag on a surface of a non-planar object not in accordance with the present invention, comprising first depositing a separator on the surface of the non-planar object.
FIG. 18 illustrates a flowchart of adapting an antenna of the RFID tag to conform to the separator not in accordance with the present invention.
FIG. 19 illustrates a flowchart of adapting the separator and then adapting an antenna of the RFID tag to conform to the separator not in accordance with the present invention.
FIG. 20A illustrates a flowchart of adapting the separator to comprise a ramped portion and then adapting an antenna of the RFID tag to conform to the separator not in accordance with the present invention.
FIG. 20B illustrates a flowchart of illustrating first depositing a base conductor on the surface of the non-planar object before the separator not in accordance with the present invention.

### DETAILED DESCRIPTION

The innovation is now described with reference to the drawings, wherein like reference numerals are used to refer to like elements throughout. In the following description, for purposes of explanation, numerous specific details are set forth in order to provide a thorough understanding thereof. It may be evident, however, that the innovation can be practiced without these specific details. In other instances, well-known structures and devices are shown in block diagram form in order to facilitate a description thereof.

### I. RFID Tags

### A. Metallic Items or Objects

In one example not according to the present invention, the reactive RFID strap components contain an RFID chip or strap and a conductor component which are both secured to a clip component, such as a clip component formed of plastic or some other suitable material. The reactive RFID strap component is then attached to a metallic item or object. If the size and shape of the metallic item is suitable, the reactive RFID strap component is capable of inducing a far field antenna response, wherein coupling can be between electric fields, magnetic fields, or both with the coupling related to the structure of the reactive RFID strap component and its proximity to the metallic item.

In some examples not according to the present invention, the RFID chip and conductor component can be secured to the clip component in multiple ways. For example, the conductor component can be formed in a conductive loop with the RFID chip in series, with coupling primarily by the magnetic fields. Alternatively, the conductor component can be a generally U-shaped conductor on the frame which couples to a metallic item primarily by the electric fields. In other examples not according to the present invention, the conductor component can be a conductive loop that is mounted on the frame and encircles the tab of the clip component. The various alternative examples not according to the present invention of the clip components can be modified to help secure the clip component to the metallic item by adding surface deflections, adhesive fixing points, or tabs designed to engage with an opening or plurality of openings already formed in the metallic item or package to provide a more secure attachment thereto. Furthermore, various methods of manufacturing a RFID tag comprising an antenna and a reactive RFID strap on a three dimensional (3D) or non-planar object are also disclosed.

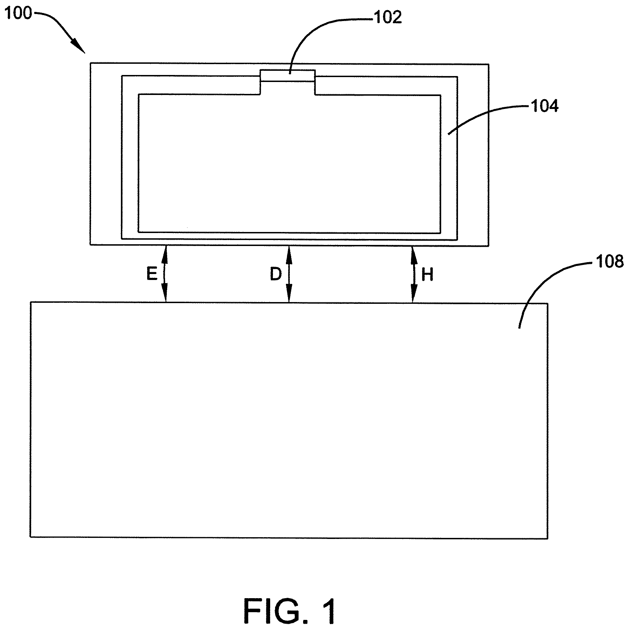

Referring initially to the drawings, FIG. 1 illustrates a top perspective view of a reactive RFID strap component 100 in proximity with and coupled to a metallic item 108 or other conductive object. The reactive RFID strap component 100 is typically a reactive strap which induces an antenna response into the metallic item 108, and is integrated into a plastic clip but can be any reactive object as is known in the art. Further, reactive RFID strap component 100 can be any suitable size, shape, and/or configuration as is known in the art without affecting the overall concept of the invention. One of ordinary skill in the art will appreciate that the shape, size and configuration of the reactive RFID strap component 100 shown in the various FIGS. is for illustrative purposes only, and that many other shapes and sizes of the reactive RFID strap component 100 are well within the scope of the present disclosure. Although the dimensions of the reactive RFID strap component 100 (i.e., length, width, and height) are important design parameters for good performance, the reactive RFID strap component 100 may be any shape, size or configuration that ensures optimal performance during use and satisfies user need or preference.

Typically, the reactive RFID strap component 100 is comprised of a RFID chip or strap 102 and a conductor component 104 which are both secured to a clip component 106. The reactive RFID strap component 100 is then attached to a metallic item 108 or other suitable conductive object as is known in the art. If the size and shape of the metallic item 108 are sufficient, the reactive RFID strap component 100 can induce a far field antenna response. For example, coupling can be via electric fields (E), magnetic fields (H), or commonly, by both electric (E) and magnetic (H) fields with coupling being related to the structure of the reactive RFID strap component 100 and its proximity to the metallic item 108. Thus, coupling of the reactive RFID strap component 100 to the metallic item 108 in the electric (E) and magnetic (H) fields is somewhat dependent upon geometry.

The reactive RFID strap components 100 can be versatile, such that they can be altered depending on the needs and/or wants of a user. For example, the reactive RFID strap components 100 can be produced to be relatively flat so they can be used in a roll to roll process, or other suitable distribution process as is known in the art. Further, the reactive RFID strap components 100 are designed to slip over the edges of metallic items 108 and could incorporate a stop such that they only transmit a certain distance. Additionally, the reactive RFID strap components 100 of the present invention in their various possible alternative examples can comprise an adhesive with a release liner making the reactive RFID strap components 100 easy to attach to and remove from the metallic items 108. The profile of the strap component 100, or the amount of material that sticks up above the metallic item 108, can be varied as well, depending on the needs and/or wants of a user. Overall, the reactive RFID strap components 100 are produced to be quite robust or strong and easily applied to the metallic items 108.

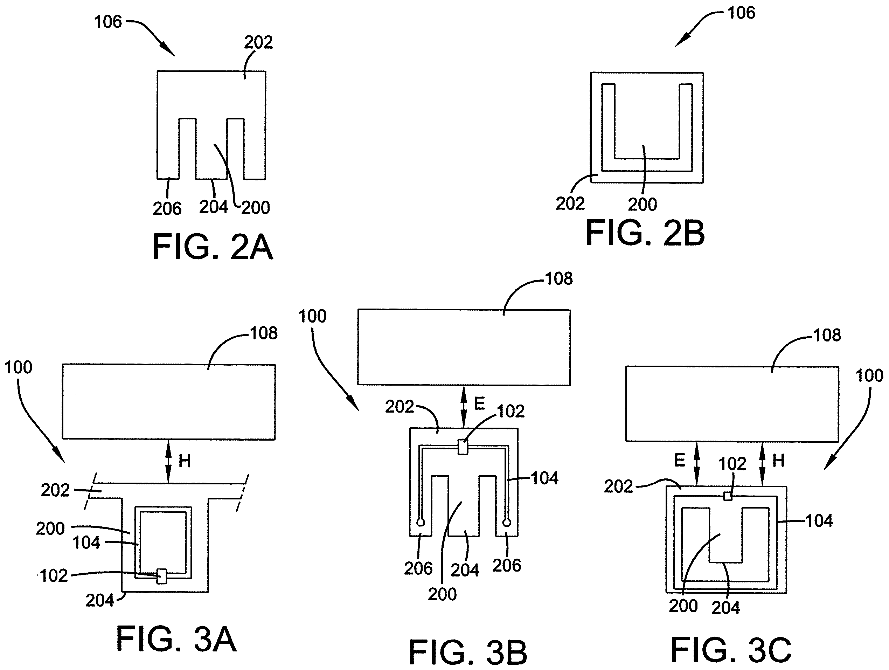

As shown in FIGS. 2A-B, the RFID chip 102 and the conductor component 104 may both be secured to a clip component 106. More specifically, FIG. 2A illustrates a front perspective view of one possible example of the clip component 106 not according to the present invention, and FIG. 2B illustrates a front perspective view of an alternative example of the clip component not according to the present invention. Typically, the clip component 106 is a plastic clip, but can also be made of any suitable material as is known in the art. Further, the clip component 106 can be any suitable size, shape, and/or configuration as is known in the art.

One of ordinary skill in the art will appreciate that the shape, size and configuration of the clip component 106 shown in FIGS. 2A-B is for illustrative purposes only, and that many other shapes and sizes of the clip component 106 are well within the scope of the present disclosure. Although the dimensions of the clip component 106 (i.e., length, width, and height) are important design parameters for good performance, the clip component 106 may be any shape or size that ensures optimal performance during use. Further, the clip component 106 can typically be utilized in two basic forms as shown, however the clip component 106 can also utilize other suitable forms as is known in the art.

As shown in FIG. 2A, the clip component 106 comprises a tab component 200 and a frame component 202. The tab component 200 comprises an edge section 204 that is aligned with the outside edge section 206 of the frame component 202. As shown in FIG. 2B, the clip component 106 comprises the tab component 200 surrounded by the frame component 202 on all edges. Thus, the two different forms of clip components 106 comprise different mechanical properties. For example, the clip component 106 of FIG. 2A would be easier to fit to a metallic item 108, as at the end of the manufacturing process, the tab component 200 can be deflected and can easily be pushed over the aligned edge sections 204 and 206. However, the clip component 106 form of FIG. 2A is less robust than that shown in FIG. 2B. Conversely, while the form of clip component 106 of FIG. 2B is more difficult to attach to a metallic item or object 108 compared to the form of clip component shown in FIG. 2A, the clip component form of FIG. 2B is more robust than the clip component form disclosed in FIG. 2A and will typically have a longer useful life.

As shown in FIGS. 3A-C, the RFID chip 102 and the conductor component 104 are both secured to a clip component 106. The RFID chip 102 and the conductor component 104 can be secured to the clip component 106 in multiple ways depending on the wants and/or needs of a user such as, for example, with adhesives. Further, the conductor component 104 can be any suitable size, shape, and/or configuration as is known in the art without affecting the overall concept of the invention. One of ordinary skill in the art will appreciate that the shape, size and configuration of the conductor component 104 shown in FIGS. 3A-C is for illustrative purposes only, and that many other shapes and sizes of the conductor component 104 are well within the scope of the present disclosure. Although the dimensions of the conductor component 104 (i.e., length, width, and height) are important design parameters for good performance, the conductor component 104 may be any shape or size that ensures optimal performance during use and that satisfies user need.

Further, the conductor component 104 can typically be fitted to the clip component 106 in a multitude of different ways such as those shown, for example, in FIGS. 3A-C. However, the conductor component 104 can also be fitted to the clip component 106 in any other suitable way as is known in the art. As shown in FIG. 3A, the conductor component 104 can be positioned in a conductive loop with the RFID chip 102 in series, thus coupling primarily in the magnetic (H) fields and positioned on the tab component 200. Alternatively, as shown in FIG. 3B, the conductor component 104 can be formed as a generally U-shaped conductor on the frame component 202, which couples to the metallic item 108 primarily by electric (E) field coupling. In a further alternative example shown in FIG. 3C not according to the present invention, the conductor component 104 may be positioned in a conductive loop with the RFID chip 102 in series and mounted on the frame component 202 such that it encircles the tab component 200.

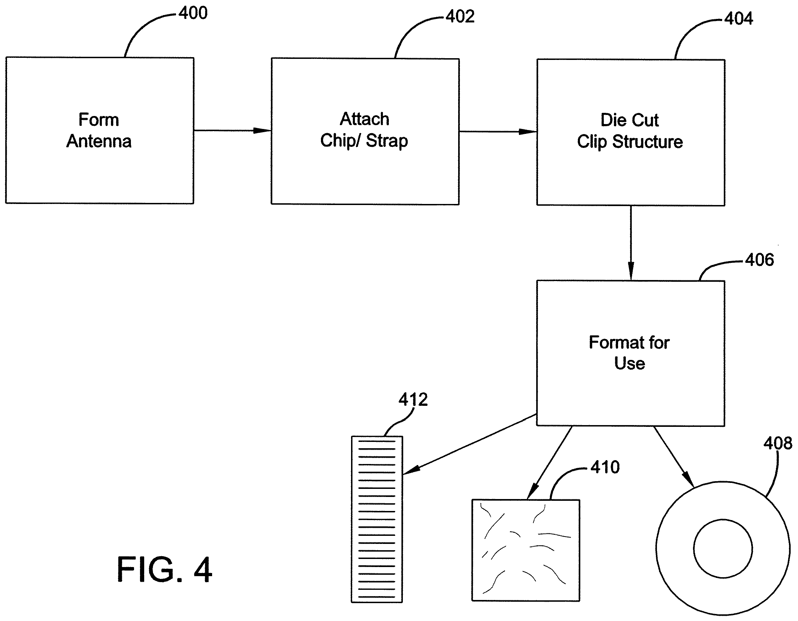

FIG. 4 illustrates a flowchart of a basic method of manufacturing a reactive RFID strap component 100 for use with a metallic item 108. At 400, the method comprises forming an antenna on the surface of a suitable material, such as plastic, for example, polyethylene terephthalate (PET). Ideally, the material is thick enough to be self-supporting as a clip component, but thin enough to be processed roll to roll, for example 0.5 mm thick, or any other suitable thickness as is known in the art. Alternatively, a thick card or corrugated material may be used, or any other suitable material as is known in the art, if the roll to roll process is not used. Specifically, the antenna may be formed via pattern printing an adhesive, laminating the foil, cutting around the pattern, and stripping the matrix.

At 402, a RFID chip or strap is then attached to the antenna, and at 404 the clip component is die cut such that a user cuts around the critical structural elements. The clip component may be retained in the web by a series of tabs or be positioned on a release liner and attached by an adhesive. At 406, the clip components may then be formatted for use, such as by placing the clip components in rolls, canisters, or bags. For example, at 408, the clip components can be formatted in rolls, the rolls are then used in a printer and dispensed into a product. At 410, the clip components are cut into single units and dropped into a bag for manual assembly. At 412, the clip components are stacked into a tube or canister for use with an applicator gun.

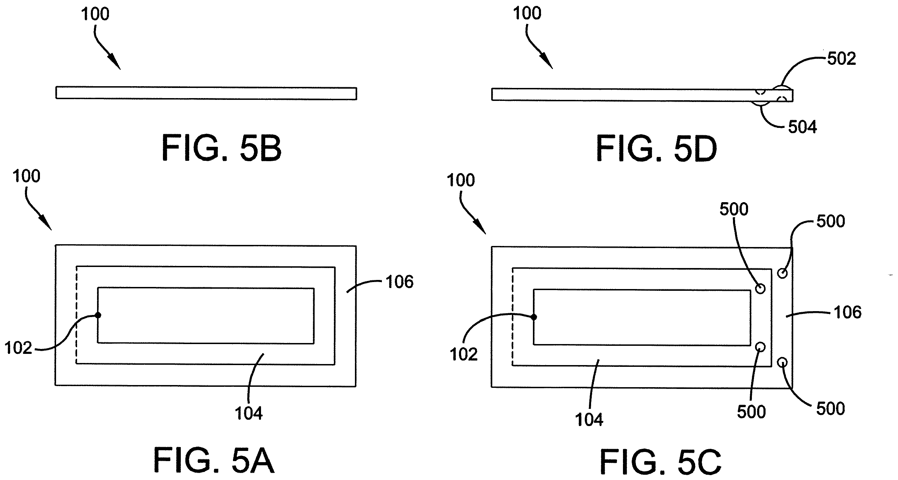

As shown in FIGS. 5A-B, the reactive RFID strap component 100 may be modified via tools that apply heat and/or pressure to create deflections 500. Alternatively, other suitable tools known in the art for making deflections 500 may be used, for example, punches. More specifically, FIGS. 5A-B illustrate front and side views of the reactive RFID strap component 100 before being shaped by the heat and/or pressure tool, or an alternative tool, to create deflections 500.

Conversely, FIGS. 5B-C illustrate front and side views of the reactive RFID strap component 100 post-deflection creating process, namely after being shaped by a tool that uses heat and/or pressure, or other means, to form deflections 500 therein. The deflections 500 can either be 3D raised bump structures 502 or lowered bump structures 504 on the surface of the reactive RFID strap component 100. The deflections 500 comprise surface bumps or catches which help to attach the clip component 106 to the conductor component 104 in a secure manner.

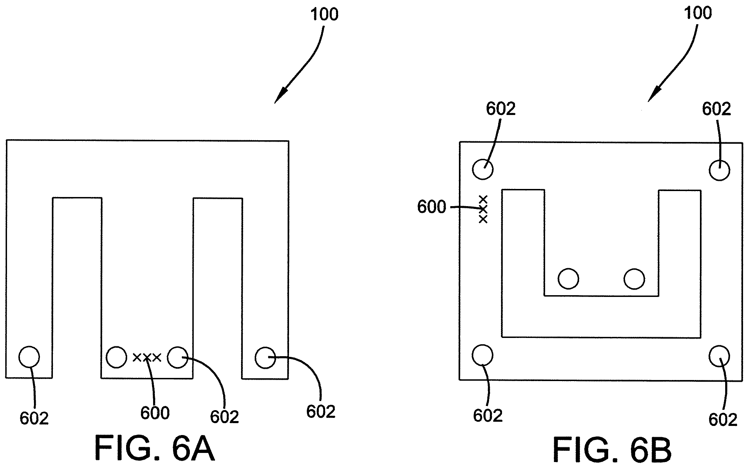

As shown in FIGS. 6A-B, the reactive RFID strap component 100 can further comprise additional grip 600 or adhesive fixing points 602 to better secure the clip component 106. More specifically, FIG. 6A illustrates a front perspective view of an example of the reactive RFID strap component 100, not according to the present invention, modified with additional adhesive grips 600 and adhesive fixing points 602, and FIG. 6B illustrates a front perspective view of an alternative example of the reactive RFID strap component 100, not according to the present invention, modified with additional grips 600 and adhesive fixing points 602. Additional grips 600 and/or adhesive fixing points 602 may be added by printing or any other suitable form of dispensing as is known in the art. The grip 600 and adhesive fixing points 602 are typically added to the surface of the reactive RFID strap component 100, but may also be added to any other suitable area as is known in the art.

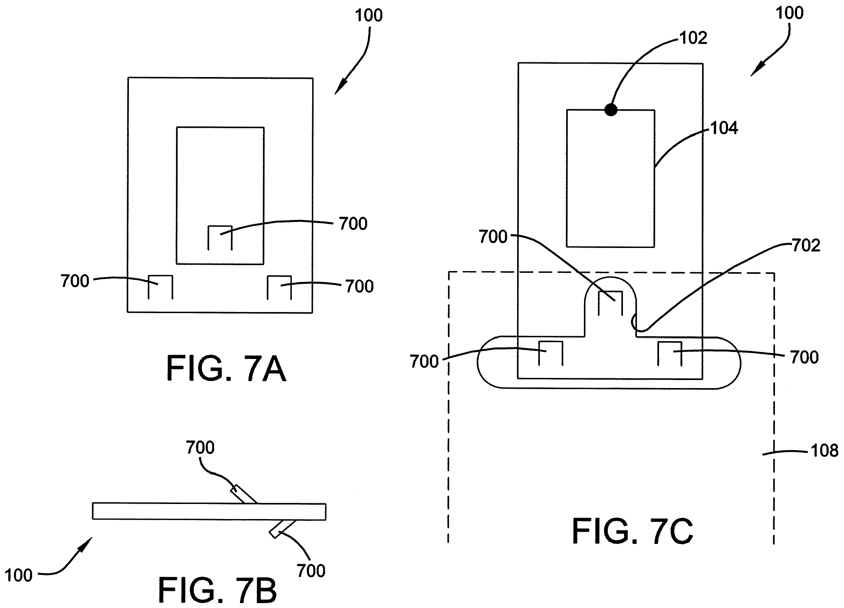

Additionally, as shown in FIGS. 7A-C, the reactive RFID strap component 100 may further comprise a plurality of tabs 700 formed on its surface. As shown in FIG. 7A, any number of tabs 700 can be used depending on the wants and/or needs of a particular user. Specifically, the tabs 700 can be non-return flaps that are pushed out of the reactive RFID strap component 100 (see FIG. 7B). As shown in FIG. 7C, the tabs 700 engage the metallic item 108. Typically, the tabs 700 engage a hole or opening 702 positioned in the metallic item 108, or any other suitable area of the metallic item 108 as is known in the art. The hole or opening 702 is typically the opening already formed in the metallic item or object 108 and that is used for hanging the item 108 on a display rail or hook.

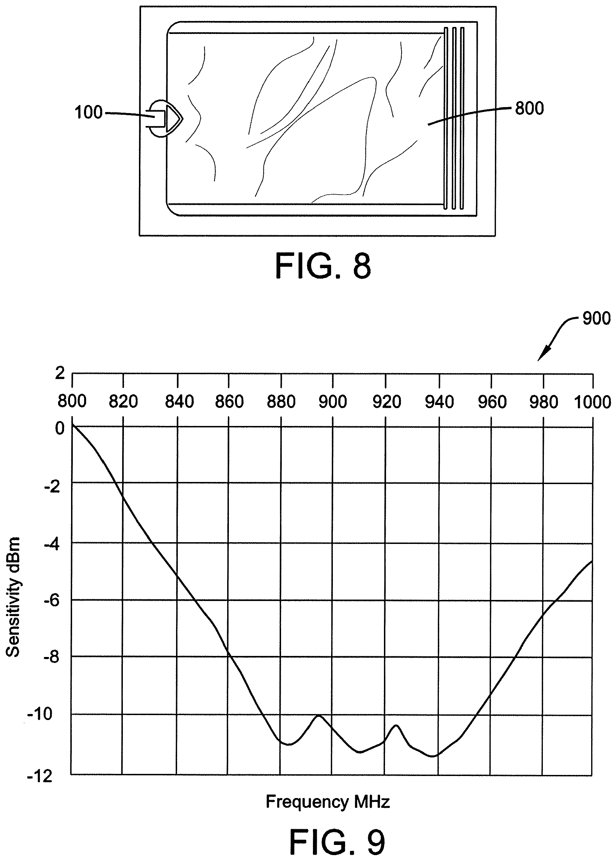

As shown in FIGS. 8, the reactive RFID strap component 100 may be secured to a metallic bag 800 to induce a far field antenna response, wherein coupling can be between electric fields, magnetic fields, or both. Further, FIG. 9 illustrates a graph of the far field response in accordance with the disclosed architecture, and which illustrates an approximate -11dBm sensitivity over the FCC band.

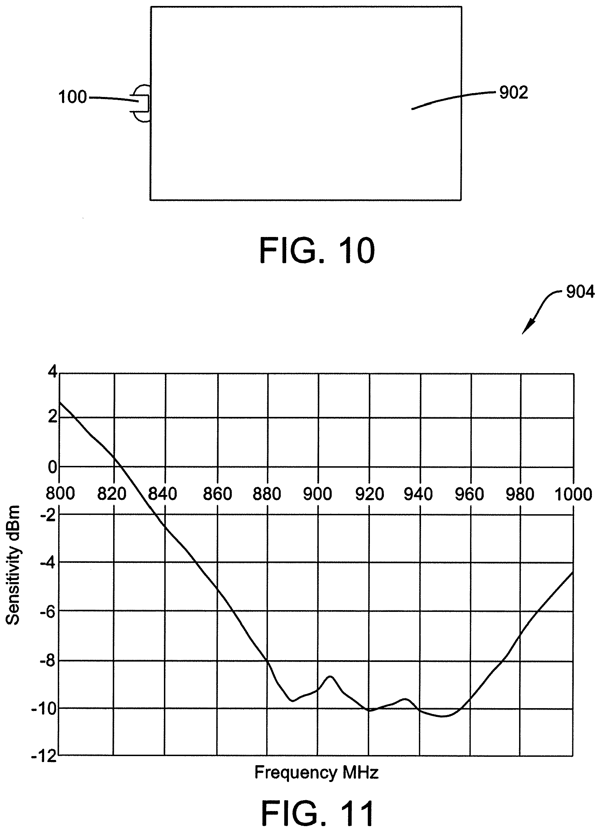

As shown in FIG. 10, the reactive RFID strap component 100 may also be secured to a metallic box 902 to induce a far field antenna response, wherein coupling can be between electric fields, magnetic fields, or both. Further, FIG. 11 illustrates a graph of the far field response in accordance with the disclosed architecture, and which illustrates an approximate -10 dBm sensitivity over the FCC band.

### B. Three-Dimensional (3D) Objects

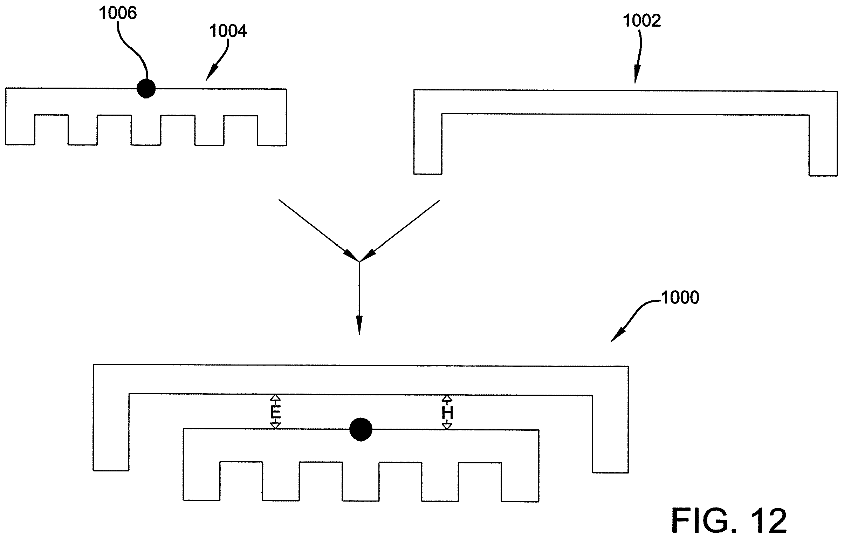

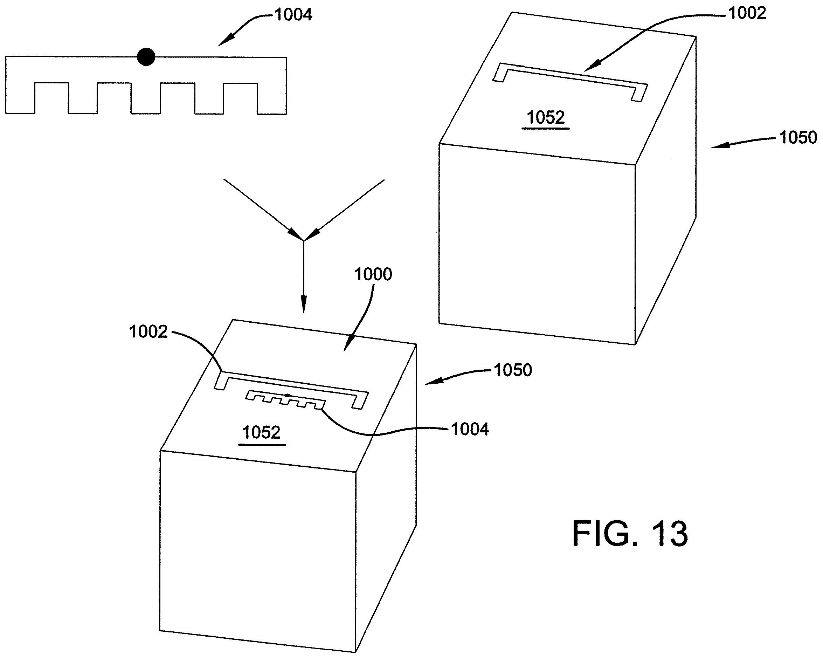

FIGS. 12-14 illustrate a, RFID tag 1000 positioned on a surface 1052 of a non-planar object 1050, and a method of manufacturing the same. The RFID tag 1000 contains an antenna 1002 and a reactive RFID strap 1004. The reactive RFID strap 1004 further contains an RFID chip 1006. Both the antenna 1002 and the reactive RFID strap 1004 can be any suitable size, shape, and/or configuration as is known in the art without affecting the overall concept of the invention. One of ordinary skill in the art will appreciate that the shape, size and configuration of both the antenna 1002 and the reactive RFID strap 1004 shown in the various FIGS. are for illustrative purposes only, and that many other shapes and sizes of both the antenna 1002 and the reactive RFID strap 1004 are well within the scope of the present disclosure. Although the dimensions of both the antenna 1002 and the reactive RFID strap 1004 (i.e., length, width, and height) are important design parameters for good performance, both the antenna 1002 and the reactive RFID strap 1004 may be any shape, size or configuration that ensures optimal performance during use and satisfies user need and/or preference.

Typically, the RFID tag 1000 can induce a far field antenna response. For example, coupling of the antenna 1002 to the reactive RFID strap 1004 can be via electric fields (E), magnetic fields (H), or commonly, by both electric (E) and magnetic (H) fields with coupling being related to the structure of the RFID tag 1000. Therefore, coupling of the antenna 1002 to the reactive RFID strap 1004 in the electric (E) and magnetic (H) fields is somewhat dependent upon geometry. The antenna 1002 is conductive and is typically formed from a variety of conductive materials, such as, but not limited to, metal foils, cut mechanically or by a laser, printed conductive inks, or vapor deposited materials. Furthermore, the RFID tag 100 is formed by positioning the antenna 1002 near the reactive RFID strap 1004.

The generally non-planar object 1050 may be a box, bag, bottle, irregularly shaped product, or any other three dimensional object having at least one non-planar surface. It will be appreciated that the RFID tag 1000 may be formed on the non-planar surface of a product itself, or on its primary or secondary packaging as desired, any of which may serve as the non-planar object 1050.

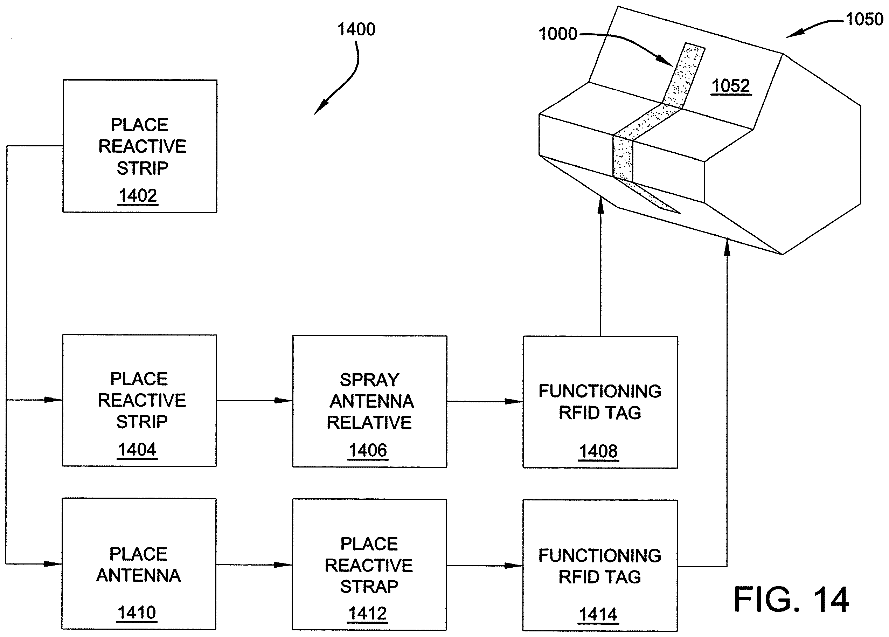

FIG. 14 illustrates a method 1400 of manufacturing the RFID tag 1000 on the non-planar surface 1052 of the non-planar object 1050. The method begins at 1402 where the non-planar object 1050 for receiving the RFID tag 1000 is selected. The construction of the RFID tag 1000 begins by forming the antenna 1002 on the non-planar surface 1052 of the non-planar object 1050 at step 1410. At step 1412, the reactive RFID strap 1004 is then positioned on the non-planar surface 1052 of the non-planar object 1050. The reactive RFID strap 1004 is then coupled to the antenna 1002 to induce a far field antenna response as a functioning RFID tag 1000 at step 1414.

Alternatively, and as also illustrated in FIG. 14, the method 1400 may begin at step 1402 wherein the non-planar object 1050 for receiving the RFID tag 1000 is selected. At step 1404, the construction of the RFID tag 1000 may begin by forming and positioning the reactive RFID strap 1004 on the non-planar surface 1052 of the non-planar object 1050, prior to forming the antenna 1002. Then, at step 1406, the antenna 1002 is formed on the non-planar surface 1052 of the non-planar object 1050, and the reactive RFID strap 1004 is coupled to the antenna 1002 to induce a far field antenna response as a functioning RFID tag 1000 at step 1408. More specifically, the coupling of the antenna 1002 to the reactive RFID strap 1004 can be via electric fields (E), magnetic fields (H), or by both electric (E) and magnetic (H) fields. Additionally, the reactive RFID strap 1004 may be physically coupled to the antenna 1002 if so desired.

The antenna 1002 may be deposited onto the non-planar object 1050 by spraying or printing a conductive ink to form the antenna 1002. The ability to choose between spraying or printing to deposit a conductor onto a non-planar object, where an antenna shape may be adapted to function optimally, provides the manufacturer or other user with greater design flexibility and choice relative to the location on the non-planar object 1050 where an RFID tag may be formed. For example, on a bottle, it is common to try to form an RFID tag antenna on a flat surface on either the base or a top of the bottle. However, by using the methods 1400 depicted in FIG. 14, a user may form the antenna 1002 on any portion of the bottle surface, and adapt the same to the shape or contour of the bottle, so that in conjunction with the reactive RFID strap 1004 that is flexible enough to conform to the non-planar surface 1052, a high performance RFID tag 1000 may be created.

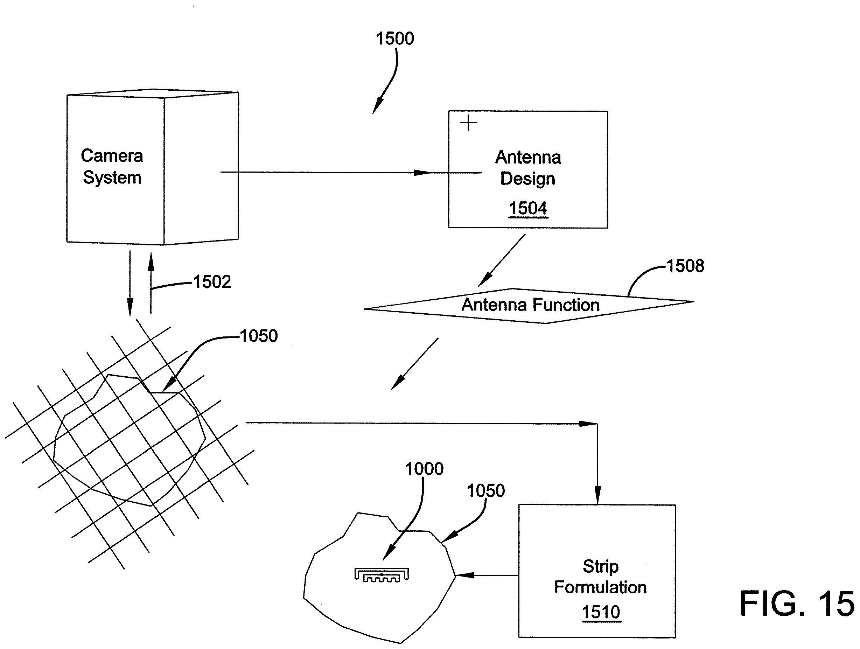

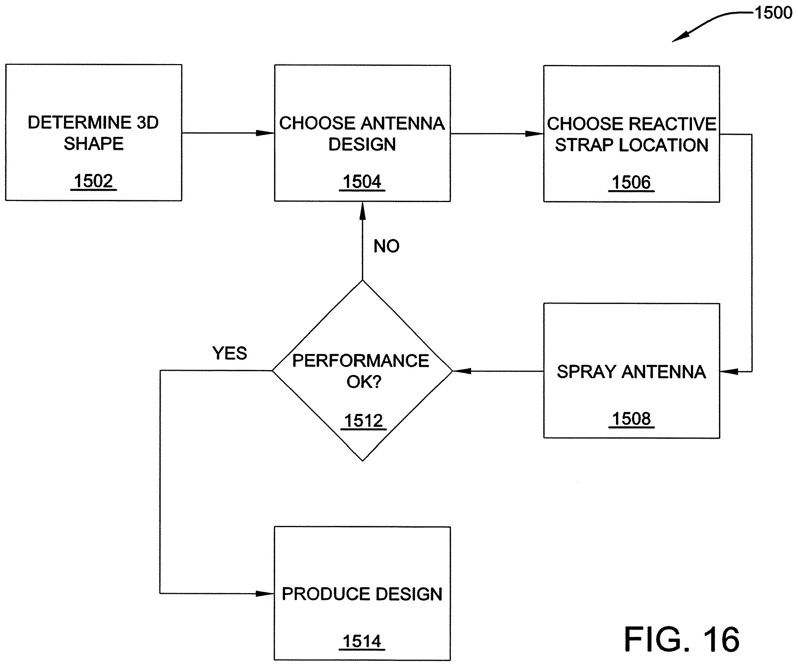

FIGS. 15 and 16 illustrate a method 1500 of manufacturing a RFID tag 1000 adapted for a surface 1052 of a non-planar object 1050 based on the object shape and/or composition. More specifically, the method 1500 utilizes a camera system and a laser grid or the like to precisely scan the non-planar object 1050 onto which the antenna will be formed to insure that the antenna is correctly created, as there may be variations in the non-planar object 1050 and/or its placement on a production line. As with the prior methods 1400 depicted in FIG. 14, the reactive RFID strap 1004 is placed on the surface 1052 of the non-planar object 1050 before or after creation of the antenna 1002 to form the high performance RFID tag 1000.

More specifically, the method 1500 begins at step 1502 by determining the three dimensional position and shape of the non-planar object 1050 as the camera system scans the surface 1052. At step 1504, a design for an antenna 1002 suitable for a chosen location along the surface 1052 of the non-planar object 1050 is selected, compensating for surface shape and position. A design of a reactive RFID strap 1004 and a position for attaching the reactive RFID strap 1004 to the surface 1052 of the non-planar object 1050 is chosen at step 1506. At steps 1508 and 1510, the antenna 1002 is then sprayed or created onto the surface 1052 of the non-planar object 1050, and coupled to the reactive RFID strap 1004 to form the RFID tag 1000 on the surface 1052 of the non-planar object 1050 to produce a far field antenna response. At step 1512, a measurement of RF performance is conducted, either inline or offline. If the RF performance is acceptable at step 1512, the method ends at step 1514 with the design having been successfully produced. If, on the other hand, the performance is not acceptable, the method of manufacture returns to step 1504 and the antenna design is adapted to optimize performance.

Alternatively, the reactive RFID strap 1004 may be positioned on the surface 1052 of the non-planar object 1050 before creation of the antenna 1002. Additionally, the antenna 1002 may also be printed or otherwise positioned on the surface 1052 of the non-planar object 1050. The coupling of the antenna 1002 to the reactive RFID strap 1004 can be via electric fields (E), magnetic fields (H), or by both electric (E) and magnetic (H) fields. Additionally, the reactive RFID strap 1004 may be physically coupled to the antenna 1002 if desired.

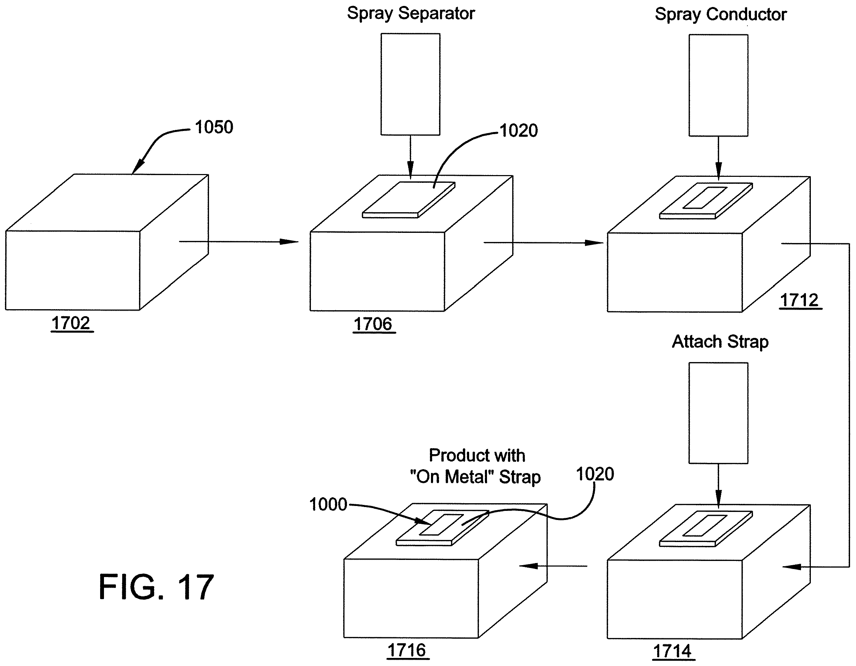

FIGS. 17-20B illustrate a method 1700 of manufacturing a RFID tag 1000 adapted for a non-planar object 1050, not according to the present invention. The method 1700 is adapted for creating a RFID tag 1000 comprising more than one layer, which is advantageous as metal and liquid objects can cause a significant drop in the performance of a standard RFID tag. As such, an RFID tag design utilizing an antenna formed on a separating material, such as a foam plastic or similar material with a high dielectric constant, for example, a flexible plastic with a ceramic dielectric powder such as, titanium dioxide or a barium titanate may be used. FIG. 17 illustrates method 1700, wherein the RFID tag 1000 is formed on the non-planar object 1050 by first depositing a separator 1020, then an antenna 1002, and a reactive RFID strap 1004 to form a "surface insensitive" RFID tag 1000.

More specifically, method of manufacturing a RFID tag 1000 adapted for a non-planar object 1050 begins at step 1702, wherein the non-planar object 1050 for receiving the RFID tag 1000 is selected. At step 1706, the construction of the RFID tag 1000 begins with the separator 1020 being deposited onto the non-planar object 1050, for example, by spraying. Next, at step 1712, an antenna 1002 is formed on the separator 1020. As previously stated, the antenna 1002 may be sprayed, printed, or otherwise positioned atop the separator 1020. At step 1714, a reactive RFID strap 1004 is attached to the separator 1020, and coupled to the antenna 1002 to create the RFID tag 1000 with a far field antenna response at step 1716. Alternatively, the reactive RFID strap 1004 may be positioned on the separator 1020 before creation of the RFID antenna 1002. The coupling of the antenna 1002 to the reactive RFID strap 1004 can be via electric fields (E), magnetic fields (H), or by both electric (E) and magnetic (H) fields. Additionally, the reactive RFID strap 1004 may be physically coupled to the RFID antenna 1002 if desired.

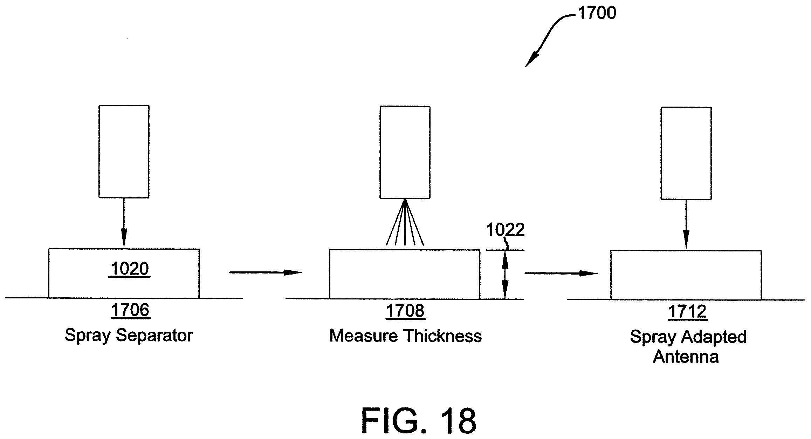

FIG. 18 illustrates an alternative version of the method 1700, not according to the present invention, wherein the antenna shape and reactive RFID strap location are adapted to a thickness measurement 1022 of the separator 1020. More specifically, after the separator 1020 is deposited onto the surface of the non-planar object 1050 at step 1706, the thickness 1022 of the separator 1020 is measured at step 1708. At step 1712, the antenna 1002 may be sprayed, printed, or otherwise positioned atop the separator 1020. At step 1714, a reactive RFID strap 1004 is attached to the separator 1020, and coupled to the antenna 1002 to create the RFID tag 1000 with a far field antenna response at step 1716 as before. It will be appreciated that the separator 1020 does not need to be applied to a larger area of the non-planar object 1050 than the area required for the RFID tag 1000. For example, the separator 1020 may be created only directly underneath the RFID tag 1000, thereby blocking less of a surface 1052 of the non-planar object 1050 so as to not obscure other desirable qualities such as branding or marking.

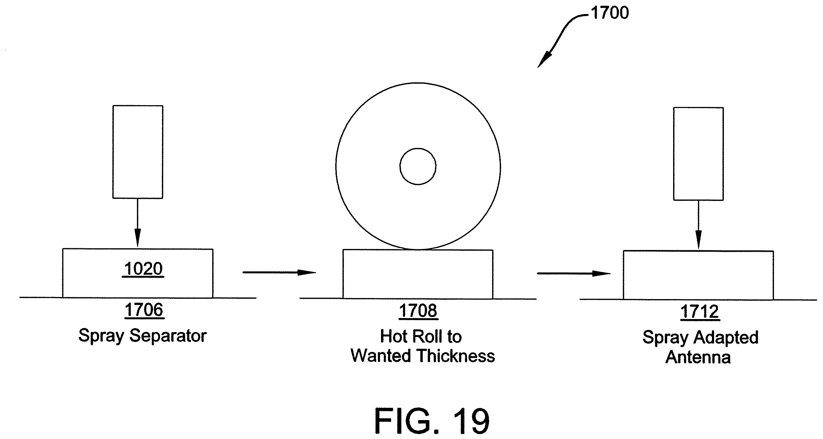

FIG. 19 illustrates a further alternative version of the method 1700, not according to the present invention, wherein the accuracy of the initially applied material for the separator 1020 is insufficient to permit formation of a stable RFID tag 1000. In this particular example, not according to the present invention, the thickness 1022 of the separator material 1020 is adapted to insure stability of the RFID tag 1000, and may be rolled to a required or desired thickness. Further, if the separator material 1020 is capable of curing with heat, the roller may be suitably heated for use to both roll and cure the separator material. More specifically, after the separator material 1020 is deposited onto the surface of the non-planar object 1050 at step 1706, the desired thickness 1022 of the separator material 1020 may be achieved at step 1708 by, for example, hot roll. The separator material 1020 may also be cured if required or otherwise desired at this stage. At step 1712, the antenna 1002 may then be sprayed, printed, or otherwise positioned atop the separator material 1020. Then, at step 1714 (as shown in FIG. 17), a reactive RFID strap 1004 is attached to the separator material 1020 and coupled to the antenna 1002 to create the RFID tag 1000 with a far field antenna response as previously described.

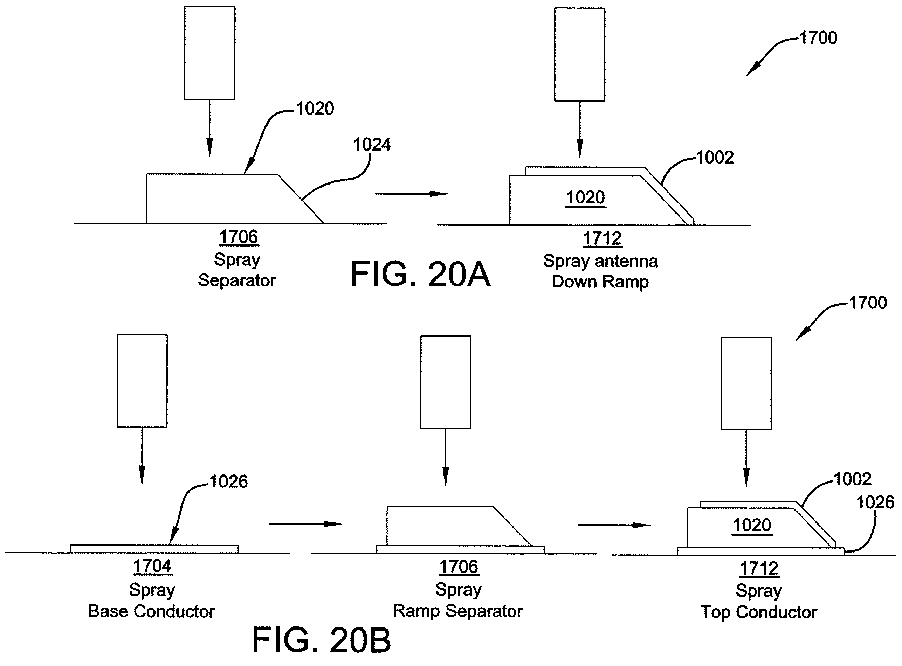

FIG. 20A illustrates an alternative version of the method 1700, not according to the present invention, wherein at least a portion of the antenna structure is deflected with respect to another portion of the antenna structure. The ability to create a deflected antenna structure is particularly desirable, as successfully creating conductors around sharp corners by printing is difficult. More specifically, the separator material 1020 may further comprise a ramped portion 1024, and be sprayed or otherwise applied so that the ramped portion 1024 is sloped or tapered downwardly to meet a surface 1052 of the non-planar object 1050. Once the separator material 1020 with the ramped portion 1024 is deposited at step 1706, the antenna 1002 is printed or sprayed onto the separator material 1020, including down along the ramped portion 1024 and into proximity contact with the surface 1052 of the non-planar object 1050, as best shown in FIG. 20A at step 1712. The reactive RFID strap 1004 may then be attached to the separator material 1020 and coupled to the antenna 1002 to create the RFID tag 1000 with a far field antenna response at 1716 as described above. This method is particularly effective for forming "on-metal" type RFID tags, wherein the non-planar object 1050 has a metallic surface 1052.

FIG. 20B illustrates yet a further alternative version of the method 1700, not according to the present invention, wherein at least a portion of the antenna structure is deflected with respect to the other part of the antenna structure and the RFID tag comprises both a top and a bottom conductor. More specifically, the method 1700 further comprises first applying a base conductor 1026 to the surface 1052 of the non-planar object 1050 at step 1704. Then, at step 1706, the separator material 1020 is sprayed or otherwise deposited atop the base conductor 1026 so that the ramped portion 1024 is sloped downwardly to the base conductor 1026. Once the separator material 1020 with the ramped portion 1024 is deposited at step 1706, the antenna 1002 and reactive RFID strap 1004 are printed or sprayed onto the separator material 1020 down along the ramped portion 1024 and into proximity contact with the base conductor 1026 to create the RFID tag 1000 with a far field antenna response at step 1712. This allows for a RFID tag structure wherein the base conductor 1026 isolates the top conductor (i.e., antenna 1002) acting as the radiating antenna from the non-planar object 1050, and is particularly effective in applications in which the non-planar object 1050 contains a high loss liquid such as water.

It is, of course, not possible to describe every conceivable combination of components or methodologies for purposes of describing the claimed subject matter, but one of ordinary skill in the art may recognize that many further combinations and permutations of the claimed subject matter are possible. Accordingly, the claimed subject matter is intended to embrace all such alterations, modifications and variations that fall within the scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A method (1400) of manufacturing a radio frequency identification ,RFID, tag (1000) on a non-planar surface (1052) of an object (1050) comprising:
forming (1406; 1410) an antenna (1002) on the non-planar surface of the object, wherein the antenna is sprayed or printed on the non-planar surface of the object;
positioning(1404; 1412) a reactive RFID strap on the non-planar surface of the object, so that,
when in use, the RFID strap couples to the antenna to induce an antenna response.

2. The method of manufacturing the RFID tag on the non-planar surface of the object of claim 1, wherein the reactive RFID strap is positioned on the non-planar surface prior to forming the antenna.

3. The method of manufacturing the RFID tag on the non-planar surface of the object of claim 1 or 2, wherein the reactive RFID strap is coupled to the antenna via an electric field;
or wherein the reactive RFID strap is coupled to the antenna via a magnetic field.

4. The method of manufacturing the RFID tag on the non-planar surface of the object of claim 1 or 2, wherein the reactive RFID strap is coupled to the antenna via both an electric field and a magnetic field.

5. The method of manufacturing the RFID tag on the non-planar surface of the object of any one of claims 1-4, wherein the reactive RFID strap is physically coupled to the antenna.

6. The method of manufacturing the RFID tag on the non-planar surface of the object of any one of claims 1-5, wherein the antenna is formed from a conductive ink.

7. A method (1500) of manufacturing a radio frequency identification ,RFID, tag (1000) adapted for a non-planar surface (1052) of an object (1050) comprising:
scanning (1502) a non-planar surface of the object;
selecting (1504) a design for an antenna suitable for the non-planar surface at a chosen location;
selecting (1506) a design of a reactive RFID strap;
choosing a position for attaching the reactive RFID strap to the non-planar surface; and
forming the RFID tag on the non-planar surface to induce a far field antenna response;
wherein forming the RFID tag on the non-planar surface comprises forming the RFID antenna on the non-planar surface of the object either before or after the reactive RFID strap is positioned on the surface, wherein the antenna is sprayed or printed on the non-planar surface of the object.

8. The method of manufacturing the RFID tag adapted for the non-planar surface of the object of claim 7 further comprising a step of measuring (1512) a radio frequency (RF) performance of the RFID tag once formed.

9. The method of manufacturing the RFID tag adapted for the non-planar surface of the object of claim 8 further comprising adapting the design of the antenna to optimize the RF performance.

10. The method of manufacturing the RFID tag adapted for the non-planar surface of the object of any one of claims 7-9, wherein the reactive RFID strap is coupled to the antenna via at least one of an electric field and a magnetic field.

## Patentansprüche

1. Verfahren (1400) zur Herstellung eines Radiofrequenz-Identifikations-, RFID-Etiketts (1000) auf einer nicht ebenen Oberfläche (1052) eines Objekts (1050), umfassend:
Bilden (1406; 1410) einer Antenne (1002) auf der nicht ebenen Oberfläche des Objekts, wobei die Antenne auf die nicht ebene Oberfläche des Objekts gesprüht oder gedruckt ist;
Positionieren (1404; 1412) eines reaktiven RFID-Bands auf der nicht ebenen Oberfläche des Objekts, sodass in Verwendung das RFID-Band an die Antenne koppelt, um eine Antennenreaktion zu induzieren.

2. Verfahren zur Herstellung des RFID-Etiketts auf der nicht ebenen Oberfläche des Objekts nach Anspruch 1, wobei das reaktive RFID-Band vor dem Bilden der Antenne auf der nicht ebenen Oberfläche positioniert wird.

3. Verfahren zur Herstellung des RFID-Etiketts auf der nicht ebenen Oberfläche des Objekts nach Anspruch 1 oder 2, wobei das reaktive RFID-Band an die Antenne über ein elektrisches Feld gekoppelt ist;
oder wobei das reaktive RFID-Band an die Antenne über ein Magnetfeld gekoppelt ist.

4. Verfahren zur Herstellung des RFID-Etiketts auf der nicht ebenen Oberfläche des Objekts nach Anspruch 1 oder 2, wobei das reaktive RFID-Band an die Antenne sowohl über ein elektrisches Feld als auch ein magnetisches Feld gekoppelt ist.

5. Verfahren zur Herstellung des RFID-Etiketts auf der nicht ebenen Oberfläche des Objekts nach einem der Ansprüche 1-4, wobei das reaktive RFID-Band physisch an die Antenne gekoppelt ist.

6. Verfahren zur Herstellung des RFID-Etiketts auf der nicht ebenen Oberfläche des Objekts nach einem der Ansprüche 1-5, wobei die Antenne aus einer leitenden Tinte gebildet ist.

7. Verfahren (1500) zur Herstellung eines Radiofrequenz-Identifikations-, RFID-Etiketts (1000), das für eine nicht ebene Oberfläche (1052) eines Objekts (1050) ausgelegt ist, umfassend:
Abtasten (1502) einer nicht ebenen Oberfläche des Objekts;
Auswählen (1504) eines Designs für eine Antenne, das für die nicht ebene Oberfläche an einer gewählten Stelle geeignet ist;
Auswählen (1506) eines Designs eines reaktiven RFID-Bands;
Wählen einer Position zum Anbringen des reaktiven RFID-Bands an der nicht ebenen Oberfläche, und
Bilden des RFID-Etiketts auf der nicht ebenen Oberfläche, um eine Fernfeldantennenreaktion zu induzieren;
wobei das Bilden des RFID-Etiketts auf der nicht ebenen Oberfläche Bilden der RFID-Antenne auf der nicht ebenen Oberfläche des Objekts umfasst, entweder bevor oder nachdem das reaktive RFID-Band auf der Oberfläche positioniert ist, wobei die Antenne auf die nicht ebene Oberfläche des Objekts gesprüht oder gedruckt wird.

8. Verfahren zur Herstellung des RFID-Etiketts, das für die nicht ebene Oberfläche des Objekts nach Anspruch 7 ausgelegt ist, ferner umfassend einen Schritt des Messens (1512) einer Radiofrequenz(RF-)Leistung des RFID-Etiketts, sobald es gebildet ist.

9. Verfahren zur Herstellung des RFID-Etiketts, das für die nicht ebene Oberfläche des Objekts nach Anspruch 8 ausgelegt ist, ferner umfassend Auslegen des Designs der Antenne, um die RF-Leistung zu optimieren.

10. Verfahren zur Herstellung des RFID-Etiketts, das für die nicht ebene Oberfläche des Objekts nach einem der Ansprüche 7-9 ausgelegt ist, wobei das reaktive RFID-Band an die Antenne über zumindest eines von einem elektrischen Feld und einem magnetischen Feld gekoppelt ist.

## Revendications

1. Procédé (1400) de fabrication d'une étiquette d'identification radio-fréquence, RFID, (1000) sur une surface non plane (1052) d'un objet (1050) comprenant :
la formation (1406 ; 1410) d'une antenne (1002) sur la surface non plane de l'objet, ladite antenne étant pulvérisée ou imprimée sur la surface non plane de l'objet ;
le positionnement (1404 ; 1412) d'une bande RFID réactive sur la surface non plane de l'objet, afin que, lors de son utilisation, la bande RFID se couple à l'antenne pour induire une réponse d'antenne.

2. Procédé de fabrication de l'étiquette RFID sur la surface non plane de l'objet de la revendication 1, ladite bande RFID réactive étant positionnée sur la surface non plane avant la formation de l'antenne.

3. Procédé de fabrication de l'étiquette RFID sur la surface non plane de l'objet de la revendication 1 ou 2, ladite bande RFID réactive étant couplée à l'antenne par l'intermédiaire d'un champ électrique ;
ou ladite bande RFID réactive étant couplée à l'antenne par l'intermédiaire d'un champ magnétique.

4. Procédé de fabrication de l'étiquette RFID sur la surface non plane de l'objet de la revendication 1 ou 2, ladite bande RFID réactive étant couplée à l'antenne par l'intermédiaire à la fois d'un champ électrique et d'un champ magnétique.

5. Procédé de fabrication de l'étiquette RFID sur la surface non plane de l'objet de l'une quelconque des revendications 1 à 4, ladite bande RFID réactive étant physiquement couplée à l'antenne.

6. Procédé de fabrication de l'étiquette RFID sur la surface non plane de l'objet de l'une quelconque des revendications 1 à 5, ladite antenne étant formée à partir d'une encre conductrice.

7. Procédé (1500) de fabrication d'une étiquette d'identification radio-fréquence, RFID, (1000) adaptée à une surface non plane (1052) d'un objet (1050) comprenant :
le balayage (1502) d'une surface non plane de l'objet ;
la sélection (1504) d'une conception pour une antenne appropriée à la surface non plane au niveau d'un emplacement choisi ;
la sélection (1506) d'une conception d'une bande RFID réactive ;
le choix d'une position pour attacher la bande RFID réactive à la surface non plane ; et
la formation de l'étiquette RFID sur la surface non plane pour induire une réponse d'antenne en champ lointain ;
ladite formation de l'étiquette RFID sur la surface non plane comprenant la formation de l'antenne RFID sur la surface non plane de l'objet soit avant soit après que la bande RFID réactive est positionnée sur la surface, ladite antenne étant pulvérisée ou imprimée sur la surface non plane de l'objet.

8. Procédé de fabrication de l'étiquette RFID adaptée à la surface non plane de l'objet de la revendication 7 comprenant en outre une étape de mesure (1512) d'une performance radiofréquence (RF) de l'étiquette RFID une fois formée.

9. Procédé de fabrication de l'étiquette RFID adaptée à la surface non plane de l'objet de la revendication 8 comprenant en outre l'adaptation de la conception de l'antenne pour optimiser la performance RF.

10. Procédé de fabrication de l'étiquette RFID adaptée à la surface non plane de l'objet de l'une quelconque des revendications 7 à 9, ladite bande RFID réactive étant couplée à l'antenne par l'intermédiaire d'au moins l'un d'un champ électrique et d'un champ magnétique.
